# EUROPÄISCHE PATENTANMELDUNG

(11) **EP 1 744 436 A1**
(43) Veröffentlichungstag der Anmeldung: **17.01.2007**
(21) Anmeldenummer: 05015233.9
(22) Anmeldetag: 13.07.2005
(51) Int. Cl.: H02K 5/167, H02K 7/08

(54) **Elektrische Maschine mit Axialausgleichselement, Stellantrieb mit einer derartigen elektrischen Maschine sowie Verwendung einer derartigen elektrischen Maschine in einem Kraftfahrzeug**

(71) Anmelder: SIEMENS AKTIENGESELLSCHAFT, 80333 München (DE)
(72) Erfinder: Viernekes, Gerald, 97437 Hassfurt (DE); Zaps, Klaus, 97332 Volkach (DE)

(57) **Zusammenfassung**

Die elektrische Maschine (4) weist einen Stator (17), einen Rotor (7) mit einer Rotorwelle (5) sowie ein Lager (8) auf. Ein Ende der Rotorwelle (5) ist im Lager (8) geführt, wobei das Lager (8) in Axialrichtung in eine Klemmbrille (9) eingeschoben ist. Die Klemmbrille (9) ist zusammen mit dem Lager (8) in einem Gehäuse (6) der elektrischen Maschine (4) fixiert. Erfindungsgemäß bildet die Klemmbrille (9) ein Topflager (22) aus, welches das durch das Lager (8) geführte Ende der Rotorwelle (5) axial begrenzt. Insbesondere ist das Topflager (22) ein axial verjüngter zylindrischer Fortsatz der Klemmbrille (9), der ein im Wesentlichen axial wirkendes Federelement (16, 23) für eine mögliche axiale Bewegung des Topflagers (22) ausbildet. Die Klemmbrille (9) bewirkt als einzelnes Bauelement die Fixierung des motorseitigen Lagers im Gehäuse der elektrischen Maschine (4) und zugleich eine axiale Begrenzung der Rotorwelle (5) im Sinne eines Toleranz- oder Axialausgleichs. Dadurch reduziert sich der Bauteil- und Montageaufwand für die elektrische Maschine (4). Die Erfindung betrifft zudem einen Stellantrieb (1) mit einer Getriebeeinheit (2) und einer derartigen elektrischen Maschine (4) sowie eine Verwendung der elektrischen Maschine (4) in einem Kraftfahrzeug.

## Beschreibung

Elektrische Maschine mit Axialausgleichselement, Stellantrieb mit einer derartigen elektrischen Maschine sowie Verwendung einer derartigen elektrischen Maschine in einem Kraftfahrzeug

Die Erfindung betrifft eine elektrische Maschine, die einen Stator, einen Rotor mit einer Rotorwelle und ein Lager aufweist. Ein Ende der Rotorwelle ist in einem Lager geführt, welches in Axialrichtung in eine Klemmbrille eingeschoben ist. Die Klemmbrille ist zusammen mit dem Lager in einem Gehäuse der elektrischen Maschine fixiert. Die Erfindung betrifft zudem einen Stellantrieb mit einer Getriebeeinheit und einer derartigen elektrischen Maschine. Eine solche elektrische Maschine ist z.B. im Kraftfahrzeugbereich einsetzbar und kann dort z.B. als Fensterhebermotor oder als Pumpenantrieb verwendet werden.

Elektrische Maschinen, wie z.B. Elektromotoren, werden auch zum Antrieb eines Stellantriebs, wie z.B. eines Fensterheberantriebs oder eines Antriebs zur Betätigung des Schiebedaches benötigt. Ein solcher Stellantrieb weist neben der elektrischen Maschine auch eine Getriebeeinheit auf. Die Getriebeeinheit kann dabei z.B. ein Schneckenrad und eine als Schneckenwelle realisierte Getriebewelle umfassen. Die elektrische Maschine besteht aus einem in einem Gehäuse der elektrischen Maschine angeordneten Stator sowie aus einem Rotor. Der Rotor weist eine Rotorwelle bzw. Motorwelle sowie ein auf der Rotorwelle befestigtes, eine Vielzahl von Lamellen enthaltendes Rotorpaket auf. Die Getriebewelle und Rotorwelle können auch als gemeinsame Rotorwelle oder Antriebswelle einteilig ausgeführt sein.

Zum Ausgleich von fertigungs- und montagebedingten Toleranzen sind Axialspielausgleichselemente vorgesehen. Diese können zwischen der Rotorwelle und der Getriebewelle, zwischen der Getriebewelle und dem Getriebegehäuse und/oder zwischen der Rotorwelle und dem Gehäuse der elektrischen Maschine positioniert sein. Im Falle einer gemeinsamen Rotorwelle sind Axialspielausgleichselemente im motor- oder getriebeseitigen Endbereich der Rotorwelle vorgesehen. Mittels derartiger Ausgleichselemente kann jedoch aus fertigungs- und montagetechnischen Gründen kein vollständiger Ausgleich der Toleranzen erfolgen. Es ist stets ein Restspiel von bis zu 0,2 mm gegeben.

Zur Lösung des Problems ist es bekannt, den verbleibenden Spalt zu messen. Der Axialausgleich wird dann über verschieden starke Ausgleichselemente bewerkstelligt.

Alternativ kann ein gewisser Axialausgleich über Federelemente, wie z.B. über Druckfedern oder Elastomere, bewirkt werden, die als separates Element in einem Topflager eingelegt werden. Aufgrund ihrer geringen Federsteifigkeit bilden diese Federelemente bei einem Lastwechsel oder bei einer Drehrichtungsumkehrung der elektrischen Maschine bzw. des Stellantriebs jedoch eher eine Anschlagsdämpfung für die Rotorwelle.

Aus der GB 2 152 294 A ist ein Lagergehäuse für die Lagerung der Motorwelle eines Elektromotors bekannt. Das Lagergehäuse ist aus einem Kunststoff gefertigt. Zudem bildet das Lagergehäuse eine Klemmbrille aus, in welche ein Kalottenlager eingeschoben werden kann. Ein dünner Kunststofffilm des Lagergehäuses, welcher dem Ende der Motorwelle gegenüberliegt, bildet eine axiale Anschlagdämpfung.

Die Aufgabe der Erfindung besteht darin, eine elektrische Maschine anzugeben, die weniger Komponenten für einen Axialausgleich benötigt.

Diese Aufgabe wird durch eine elektrische Maschine mit den im Anspruch 1 angegebenen Merkmalen gelöst. Vorteilhafte Ausgestaltungen und Weiterbildungen der Erfindung ergeben sich aus den abhängigen Ansprüchen 2 bis 10. In Anspruch 11 ist ein Stellantrieb mit einer Getriebeeinheit und einer derartigen elektrischen Maschine angegeben. Anspruch 12 gibt eine vorteilhafte Verwendung der elektrischen Maschine in einem Kraftfahrzeug an.

Bei der erfindungsgemäßen elektrischen Maschine bildet die Klemmbrille, in welche das Lager zur Führung der Rotorwelle axial eingeschoben wird, ein Topflager aus. Das Topflager ist dabei so bemessen, dass es das durch das Lager geführte Ende der Rotorwelle axial begrenzt.

Der große Vorteil der Erfindung liegt darin begründet, dass die Klemmbrille als einzelnes Bauelement die Fixierung des Lagers im Gehäuse der elektrischen Maschine und zugleich eine axiale Begrenzung der Rotorwelle im Sinne eines Toleranz- oder Axialausgleichs bewirkt.

Dadurch reduziert sich weiterhin vorteilhaft der Bauteil- und Montageaufwand für eine elektrische Maschine.

Insbesondere ist das Topflager ein axial verjüngter zylindrischer Fortsatz der Klemmbrille. Der zylindrische Fortsatz umschließt dabei das Ende der Rotorwelle. Der "Topfboden" bildet vorzugsweise eine plane Fläche aus, welche das vorzugsweise ebenfalls plane Ende der Rotorwelle axial begrenzt. Ist die Rotorwelle z.B. in einem Stellantrieb eingespannt, so wird in gewissem Maße vorteilhaft ein Axialspiel unterbunden. Die axiale Verjüngung kann auch in einer Stufe, insbesondere in einer geschrägten Stufe, erfolgen.

In einer vorteilhaften Ausführungsform bildet die axiale Verjüngung ein im Wesentlichen axial wirkendes Federelement aus. Dadurch wird eine axiale Ausgleichsbewegung des Topflagers ermöglicht. Die Federung basiert dabei auf elastischen Biegemomenten, welche zum einen durch die Geometrie des Federelements, wie z.B. durch den Biegewinkel und durch die Materialdicke in der Verjüngung, und zum anderen durch die Materialeigenschaften, wie z.B. durch den Elastizitätsmodul des verwendeten Materials der Klemmbrille, bestimmt sind.

In einer besonderen Ausführungsform sind im Topflager seitliche Aussparungen vorgesehen, wobei die dann verbleibenden Federstege das Federelement im Verjüngungsbereich bilden. Auf diese Weise lässt sich eine im Vergleich zur vorigen Ausführungsform weniger federsteife Variante bewerkstelligen. Insbesondere weisen die Federelemente in Summe eine Federhärte im Bereich von 40 N/mm bis 80 N/mm auf. Auf diese Weise kann ein axialer Toleranzausgleich von bis zu 0,4 mm erreicht werden. Der obengenannte Bereich der Federhärte sorgt zudem vorteilhaft dafür, dass die Rotorwelle z.B. im Stellantrieb genügend steif eingespannt werden kann.

In einer bevorzugten Ausführungsform weist die dem Ende der Rotorwelle gegenüberliegende Außenseite des Topflagers eine elastische Beschichtung auf. Diese Seite kann z.B. mit einer dünnen Lage Naturkautschuk von weniger als 1 mm beschichtet sein. Die Klemmbrille wird dadurch vorteilhaft um die Funktion einer Anschlagsdämpfung erweitert. Ein Anschlag der Rotorwelle gegen das Gehäuse der elektrischen Maschine erfolgt vor allem bei einem Lastwechsel oder bei einer Drehrichtungsumkehrung der elektrischen Maschine bzw. des Stellantriebs. Die dabei auftretenden Kräfte sind dabei im Vergleich zu den axial gewünschten maximalen Vorspannkräften der Rotorwelle, wie z.B. von 25 N, um ein Vielfaches größer. Durch die dünne elastische Beschichtung wird der Anschlag der Rotorwelle auf das Gehäuse der elektrischen Maschine derart bedämpft, dass sich das entstehende Anschlagsgeräusch in einem zulässigen und nicht störenden Rahmen bewegt.

In einer besonderen Ausführungsform ist das Lager zur Führung der Rotorwelle eine Kalotte, welche in eine dazu korrespondierende Aufnahmeöffnung der Klemmbrille einschiebbar ist. Die Kalotte weist dabei eine kugelförmige Außenfläche auf, die sich in gewissen Grenzen in einer dazu korrespondierenden kugelförmigen Schale der Klemmbrille bewegen kann. Mittels der Kalotte können dabei vorteilhaft Verbiegungen und radiale Versätze der Rotorwelle ausgeglichen werden. Die Klemmbrille, welche die Kalotte umgreift, bewirkt dabei eine dauerhafte Vorspannung, so dass die Kalotte nach dem Zusammenbau der elektrischen Maschine in ihrer Lage fixiert bleibt.

In einer weiteren Ausführungsform weist die Klemmbrille ringförmig angeordnete erste Finger bzw. Fingerfedern auf, welche die Kalotte an ihrem Außenumfang in einer Verrastung umgreifen und fixieren.

Dadurch vereinfacht sich die Montage der elektrischen Maschine erheblich. Hierzu wird im Rahmen der Montage die Kalotte in axialer Richtung in die korrespondierende Öffnung der Klemmbrille eingeschoben. Die in axial und zugleich radialer Richtung gespreizten Fingerfedern bewirken vorteilhaft eine Zentrierung der Kalotte, bevor diese letztendlich in einer Verrastung in die Öffnung der Klemmbrille einschnappt. Zugleich ist die Federung der Fingerfeder so dimensioniert, dass eine einfache Montage und eine sichere Fixierung der Kalotte in der Öffnung möglich sind.

In einer weiteren vorteilhaften Ausführungsform weist die Klemmbrille zweite Fingerfedern auf, die in Radialrichtung gesehen außerhalb zu den ersten Fingerfedern angeordnet sind und die einen Kragen zur axialen und radialen Fixierung der Klemmbrille im Gehäuse der elektrischen Maschine ausbilden. Der Kragen ist vorzugsweise in einer ringförmigen Aussparung im Gehäuse der elektrischen Maschine fixierbar bzw. dort verklemmbar. Die leicht in radialer Richtung zeigenden Enden der zweiten Finger bzw. Fingerfedern bewirken dabei eine zuverlässige Verklemmung der Klemmbrille mit der ringförmigen Aussparung im Gehäuse der elektrischen Maschine.

Vorzugsweise ist die Klemmbrille in einem Stanz- und Biegevorgang aus einem Blech, insbesondere aus einem Federstahlblech, herstellbar. Nach dem Ausstanzen der zur Klemmbrille gehörenden zweidimensionalen Stanzkontur wird die Klemmbrille mittels eines Tiefziehverfahrens in ihre endgültige räumliche Form gebogen bzw. verformt.

Eine derartige Klemmbrille ist auf diese Weise besonders einfach und kostengünstig herstellbar.

Eine elektrische Maschine gemäß der Erfindung lässt sich vorteilhaft in einem Kraftfahrzeug verwenden, da insbesondere dort eine hohe Anzahl von kompakten elektrischen Maschinen, wie z.B. zum Fensterheben oder zum Öffnen und Schließen eines Schiebedachs, benötigt wird.

Weitere vorteilhafte Eigenschaften der Erfindung ergeben sich aus deren beispielhafter Erläuterung anhand der Figuren. Es zeigt:
- FIG 1: eine Schnittzeichnung eines beispielhaften Stellantriebs mit einer Getriebeeinheit und einer elektrischen Maschine gemäß der Erfindung,
- FIG 2: eine vergrößerte Darstellung der elektrischen Maschine in einer Schnittdarstellung gemäß FIG 1, welche eine in einer beispielhaften Klemmbrille mit Topflager untergebrachte Kalotte gemäß der Erfindung zeigt,
- FIG 3: eine perspektivische Ansicht der erfindungsgemäßen Klemmbrille mit noch nicht eingesetzter Kalotte,
- FIG 4: eine perspektivische Ansicht der erfindungsgemäßen Klemmbrille mit eingesetzter Kalotte und
- FIG 5: eine vergrößerte Darstellung der beispielhaften Klemmbrille mit Topflager und der darin eingeklemmten Kalotte gemäß der Schnittdarstellung aus FIG 2.

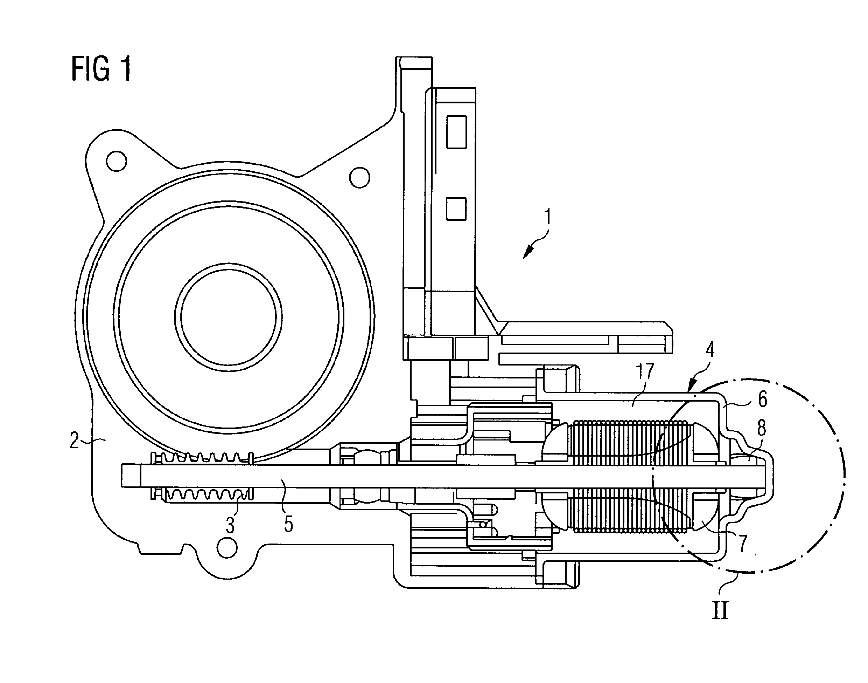

FIG 1 zeigt eine Schnittzeichnung eines beispielhaften Stellantriebs 1 mit einer Getriebeeinheit 2 und einer elektrischen Maschine 4 gemäß der Erfindung. Die Getriebeeinheit 2 weist ein Getriebegehäuse auf, in welchem ein Schneckenrad sowie eine in das Schneckenrad eingreifende Schneckenwelle 3 untergebracht sind. Die elektrische Maschine 4 besteht aus einem Gehäuse 6, einem Stator 17 und einem darin untergebrachten Rotor 7 für den motorischen Antrieb. Die Schneckenwelle 3 sitzt auf dem freien Ende einer Rotorwelle 5, wobei die Rotorwelle 5 von der elektrischen Maschine 4 angetrieben wird und zum Teil im Gehäuse 6 der elektrischen Maschine 4 untergebracht ist. Die Rotorwelle 5 ist in einem Lager 8, welches das motorseitige Ende der Rotorwelle 5 aufnimmt sowie in einem der Getriebeeinheit 2 gegenüberliegenden weiteren Lager geführt. Im Beispiel der FIG 1 ist die Rotorwelle 5 einteilig ausgeführt. Eine zweiteilige Ausführung der Rotorwelle 5 in eine Motorwelle und eine Getriebewelle mit einem dazwischenliegenden Verbindungsglied ist ebenfalls denkbar.

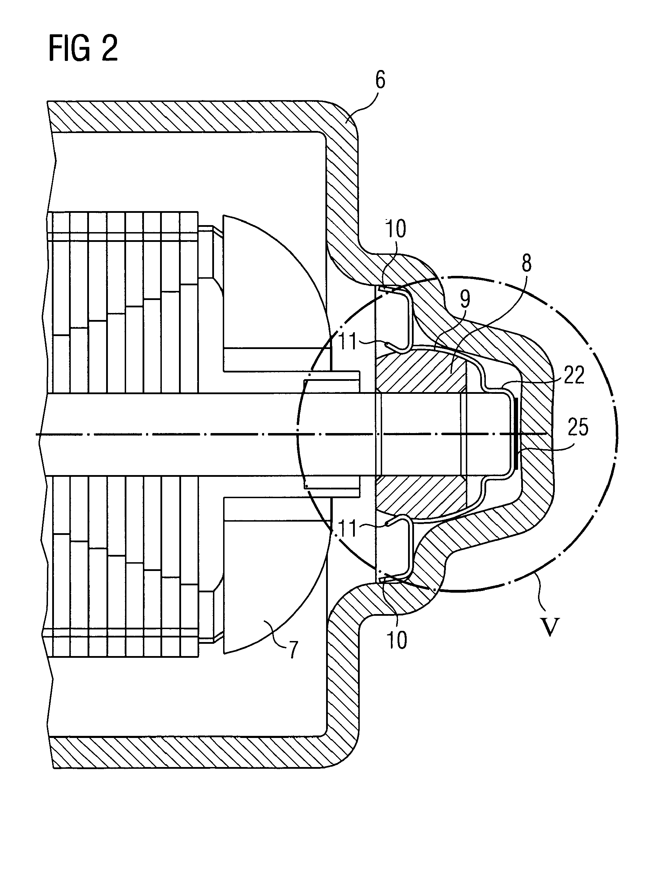

FIG 2 zeigt eine vergrößerte Darstellung der elektrischen Maschine 4 in einer Schnittdarstellung gemäß FIG 1. Die Schnittdarstellung zeigt eine in einer beispielhaften Klemmbrille 9 mit Topflager 22 untergebrachte Kalotte 8 gemäß der Erfindung. Die Klemmbrille 9 fixiert mittels erster Finger bzw. Fingerfedern 11 die eingeschobene Kalotte 8. Durch die Rückstellkraft der Fingerfedern 11 bleibt die Kalotte 8 in der korrespondierenden kugelförmigen Öffnung der Klemmbrille 9 verrastend fixiert.

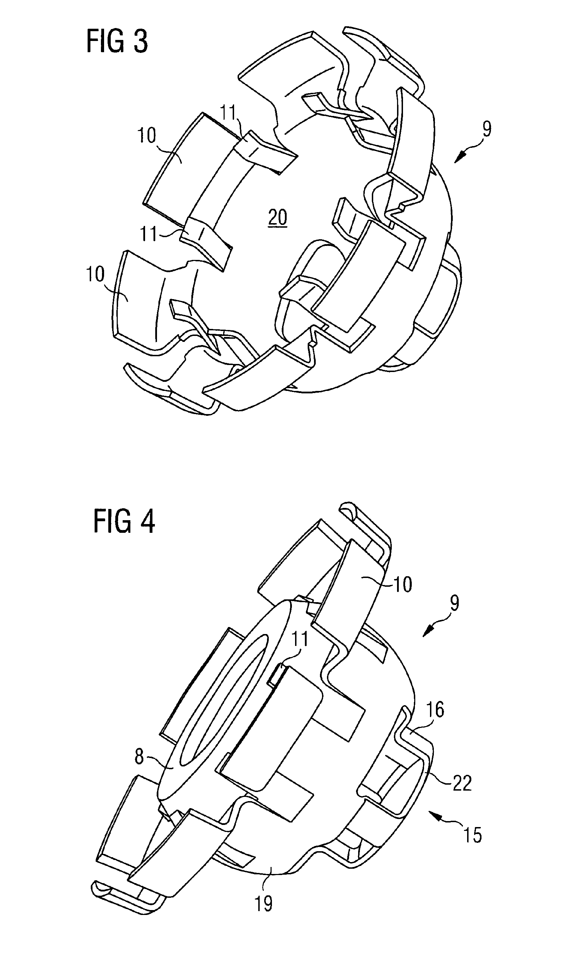

FIG 3 zeigt eine perspektivische Ansicht der erfindungsgemäßen Klemmbrille 9 mit noch nicht eingesetzter Kalotte 8. Eine derartige Klemmbrille 9 ist mittels eines Stanz- und Biegeverfahrens besonders einfach und kostengünstig herzustellen. Die vorliegende FIG 3 zeigt, dass eine solche Klemmbrille 9 aus einem Stück Blech hergestellt werden kann. Vorteilhaft ist in diesem Zusammenhang die gegeneinander versetzte Anordnung der inneren und äußeren Finger bzw. Fingerfedern 11/10.

FIG 4 zeigt eine perspektivische Ansicht der erfindungsgemäßen Klemmbrille 9 mit eingesetzter Kalotte 8. Zudem zeigt FIG 4 die auf die kugelförmige Außenkontur der Kalotte 8 abgestimmte Kontur 19 der Aufnahmeöffnung 20 der Kalotte 8. Diese Anordnung erlaubt eine vorteilhafte mögliche Verdrehung und Verkippung der Kalotte 8 in der korrespondierenden Öffnung 20 der Klemmbrille 9, so dass radiale Versätze und Verbiegungen der Rotorwelle 5 bei der Fertigung und Montage ausgeglichen werden können.

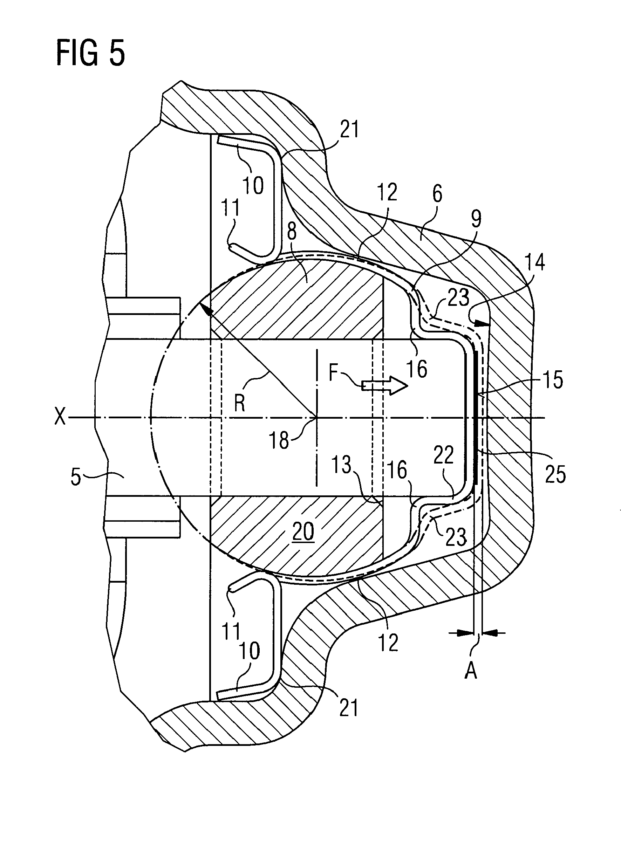

FIG 5 zeigt eine vergrößerte Darstellung der beispielhaften Klemmbrille 9 mit Topflager 22 und der darin eingeklemmten Kalotte 8 gemäß der Schnittdarstellung aus FIG 2. Mit R ist der Radius der Kugelform der Kalotte 8 dargestellt, die ihrerseits in einer kugelförmigen Öffnung der Klemmbrille 9 untergebracht ist. Die Klemmbrille 9 ist durch den Kragen 21, den die zweiten Fingerfedern 10 ausbilden, in einer ringförmigen Aussparung des Gehäuses 6 der elektrischen Maschine 4 fixiert. Zugleich liegt die Klemmbrille 9 in den Punkten 12 am Gehäuse 6 der elektrischen Maschine 4 an, so dass axiale Kräfte F in Richtung zum Ende der Rotorwelle 5 nun zu einer Auslenkung A des Topflagers 22 für einen Axialausgleich führen. Dieser Fall liegt z.B. dann vor, wenn die gemeinsame Rotorwelle 5 im Stellantrieb 1 montiert und eingespannt ist, wobei die Längsabmessungen der Rotorwelle 5 im oberen Toleranzband für die Fertigung und Montage des Stellantriebs liegen. Für den ausgelenkten Fall weiten sich die in der Verjüngung liegenden Federelemente 23 gemäß einer gestrichelten Konturlinie auf. Mit dem Bezugszeichen 16 ist die Kontur der Federelemente für den Fall eingetragen, dass nur eine geringe axiale Kraft in Richtung zum Ende der Rotorwelle 5 vorhanden ist. Dieser Fall liegt z.B. dann vor, wenn die Längsabmessungen der Rotorwelle 5 im unteren Toleranzband liegen.

Im Falle eines Lastwechsels oder einer Drehrichtungsumkehr des Stellantriebs 1 schlägt die dem "Topfboden" gegenüberliegende Seite 15 gegen eine korrespondierende Seite 14 des Motorgehäuses 6. Durch eine dünne elastische Beschichtung 25 (siehe Figur 2), die auf der dem "Topfboden" gegenüberliegenden Seite 15 aufgetragen ist, wird das Aufschlaggeräusch stark abgedämpft.

## Patentansprüche

1. Elektrische Maschine, welche einen Stator (17), einen Rotor (7) mit einer Rotorwelle (5) und ein Lager (8) aufweist, wobei ein Ende der Rotorwelle (5) im Lager (8) geführt ist, das Lager (8) in Axialrichtung in eine Klemmbrille (9) eingeschoben ist und die Klemmbrille (9) zusammen mit dem Lager (8) in einem Gehäuse (6) der elektrischen Maschine fixiert ist,
**dadurch gekennzeichnet,**
**dass** die Klemmbrille (9) ein Topflager (22) ausbildet, welches das durch das Lager (8) geführte Ende der Rotorwelle (5) axial begrenzt.

2. Elektrische Maschine nach Anspruch 1,
**dadurch gekennzeichnet,**
**dass** das Topflager (22) ein axial verjüngter zylindrischer Fortsatz der Klemmbrille (9) ist.

3. Elektrische Maschine nach Anspruch 2,
**dadurch gekennzeichnet,**
**dass** die axiale Verjüngung ein im Wesentlichen axial wirkendes Federelement (16, 23) ausbildet.

4. Elektrische Maschine nach Anspruch 3,
**dadurch gekennzeichnet,**
**dass** das Topflager (22) seitliche Aussparungen aufweist und dass die verbleibenden Stege (16, 23) im Verjüngungsbereich das Federelement bilden.

5. Elektrische Maschine nach einem der vorigen Ansprüche,
**dadurch gekennzeichnet,**
**dass** die dem Ende der Rotorwelle (5) gegenüberliegende Außenseite (15) des Topflagers (22) eine elastische Beschichtung (25) aufweist.

6. Elektrische Maschine nach einem der vorigen Ansprüche,
**dadurch gekennzeichnet,**
**dass** das Lager (8) zur Führung der Rotorwelle (5) eine Kalotte ist, welche in eine dazu korrespondierende Aufnahmeöffnung (20) der Klemmbrille (9) einschiebbar ist.

7. Elektrische Maschine nach Anspruch 6,
**dadurch gekennzeichnet,**
**dass** die Klemmbrille (9) ringförmig angeordnete erste Fingerfedern (11) aufweist, welche die Kalotte (8) an ihrem Außenumfang in einer Verrastung umgreifen und fixieren.

8. Elektrische Maschine nach Anspruch 7,
**dadurch gekennzeichnet,**
**dass** die Klemmbrille (9) zweite Fingerfedern (10) aufweist, die in Radialrichtung gesehen außerhalb zu den ersten Fingerfedern (11) angeordnet sind und die einen Kragen (21) zur axialen und radialen Fixierung der Klemmbrille (9) im Gehäuse (6) der elektrischen Maschine (4) ausbilden.

9. Elektrische Maschine nach einem der vorigen Ansprüche,
**dadurch gekennzeichnet,**
**dass** die Klemmbrille (9) in einem Stanz- und Biegevorgang aus einem Blech herstellbar ist.

10. Elektrische Maschine nach Anspruch 9,
**dadurch gekennzeichnet,**
**dass** das Blech ein Federstahlblech ist.

11. Stellantrieb mit einer Getriebeeinheit (2) und einer eine Rotorwelle (5) aufweisenden elektrischen Maschine (4) nach zumindest einem der vorigen Ansprüche.

12. Verwendung einer elektrischen Maschine nach einem der Ansprüche 1 bis 10 in einem Kraftfahrzeug.

## Geänderte Patentansprüche

### Geänderte Patentansprüche gemäss Regel 86(2) EPÜ.

**1.** Elektrische Maschine, welche einen Stator (17), einen Rotor (7) mit einer Rotorwelle (5) und ein Lager (8) aufweist, wobei ein Ende der Rotorwelle (5) im Lager (8) geführt ist, das Lager (8) eine Kalotte ist, welche in Axialrichtung in eine dazu korrespondierende Aufnahmeöffnung (20) der Klemmbrille (9) eingeschoben ist und die Klemmbrille (9) zusammen mit dem Lager (8) in einem Gehäuse (6) der elektrischen Maschine fixiert ist,
**dadurch gekennzeichnet,**
**dass** die Klemmbrille (9) ein Topflager (22) ausbildet, das ein axial verjüngter zylindrischer Fortsatz der Klemmbrille (9) ist, welches das durch das Lager (8) geführte Ende der Rotorwelle (5) axial begrenzt, wobei die axiale Verjüngung im Übergangsbereich zwischen der Kalottenaufnahme (20) und dem Topflager (22) ein im Wesentlichen axial wirkendes Federelement (16, 23) ausbildet und die Klemmbrille (9) im Bereich der Kalottenaufnahme (20) so am Gehäuse (6) der elektrischen Maschine (4) anliegt, dass axiale Kräfte in Richtung zum Ende der Rotorwelle (5) eine Auslenkung des Topflagers (22) hervorrufen.

**2.** Elektrische Maschine nach Anspruch 1,
**dadurch gekennzeichnet,**
**dass** das Topflager (22) seitliche Aussparungen aufweist und dass die verbleibenden Stege (16, 23) im Verjüngungsbereich das Federelement bilden.

**3.** Elektrische Maschine nach einem der vorigen Ansprüche,
**dadurch gekennzeichnet,**
**dass** die dem Ende der Rotorwelle (5) gegenüberliegende Außenseite (15) des Topflagers (22) eine elastische Beschichtung (25) aufweist.

**4.** Elektrische Maschine nach einem der vorigen Ansprüche,
**dadurch gekennzeichnet,**
**dass** die Klemmbrille (9) ringförmig angeordnete erste Fingerfedern (11) aufweist, welche die Kalotte (8) an ihrem Außenumfang in einer Verrastung umgreifen und fixieren.

**5.** Elektrische Maschine nach Anspruch 4,
**dadurch gekennzeichnet,**
**dass** die Klemmbrille (9) zweite Fingerfedern (10) aufweist, die in Radialrichtung gesehen außerhalb zu den ersten Fingerfedern (11) angeordnet sind und die einen Kragen (21) zur axialen und radialen Fixierung der Klemmbrille (9) im Gehäuse (6) der elektrischen Maschine (4) ausbilden.

**6.** Elektrische Maschine nach Anspruch 5,
**dadurch gekennzeichnet,**
**dass** die inneren und äußeren Fingerfedern so gegeneinander versetzt angeordnet sind,
**dass** die Klemmbrille (9) in einem Stanz- und Biegevorgang aus einem Blech herstellbar ist.

**7.** Elektrische Maschine nach Anspruch 6,
**dadurch gekennzeichnet,**
**dass** das Blech ein Federstahlblech ist.

**8.** Stellantrieb mit einer Getriebeeinheit (2) und einer eine
Rotorwelle (5) aufweisenden elektrischen Maschine (4) nach zumindest einem der vorigen Ansprüche.

**9.** Verwendung einer elektrischen Maschine nach einem der Ansprüche 1 bis 7 in einem Kraftfahrzeug.
